# EUROPEAN PATENT SPECIFICATION

(11) **EP 1 300 893 B1**
(45) Date of publication and mention of the grant of the patent: **12.05.2010**
(21) Application number: 02022250.1
(22) Date of filing: 02.10.2002
(51) Int. Cl.: H01M 2/06, H01M 2/08, H01M 10/0564

(54) **Closed type battery**
Geschlossene Batterie
Batterie fermée

(30) Priority: 02.10.2001 JP 2001306645
(43) Date of publication of application: 09.04.2003
(73) Proprietor: NEC TOKIN Tochigi, Ltd., Tochigi 321-0147 (JP)
(72) Inventor: Mizuno, Hiroyuki, Utsunomiya-shi, Tochigi 321-0147 (JP); Tsukawaki, Kazuyuki, Utsunomiya-shi, Tochigi 321-0147 (JP); Sato, Hiroyuki, Utsunomiya-shi, Tochigi 321-0147 (JP)
(74) Representative: Vossius & Partner

(56) References cited:
- EP-A- 0 319 128
- WO-A-99/05896
- FR-A- 885 533
- US-A- 4 775 604
- US-B1- 6 183 905

## Description

The present invention relates generally to a closed type battery, and more particularly to a closed type battery comprising a battery can and a battery header provided with an electrode terminal for leading via an insulating member a battery terminal of polarity opposite to that of the battery can, so that the airtightness of the battery is improved.

Various batteries are used as power sources for electronic equipments of miniature size, and miniature yet large-capacity closed batteries are employed as power sources for cellular phones, notebook PCs, camcorders, etc. Typically, closed batteries using a non-aqueous electrolyte such as high-capacity lithium batteries and lithium ion rechargeable batteries are now used.

To keep pace with the downsizing of equipments, closed batteries of rectangular shape capable of making effective use of a small space, to say nothing of cylindrical batteries, are widely used. In a typical rectangular battery, a battery can serving as one electrode of the battery is provided with an electrode terminal while isolated therefrom by an insulating member.

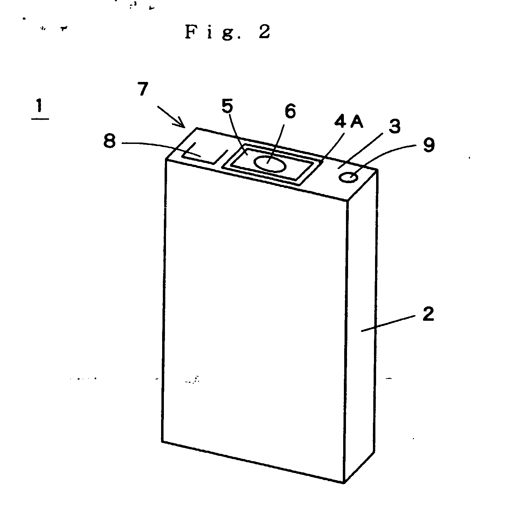

One such typical example of the closed type battery of rectangular shape is shown in Fig. 2.

A closed type battery shown generally at 1 comprises a cylindrical form of rectangular metal package 2 (hereinafter often called the battery can) made of stainless steel, soft steel nickeled on its surface, etc., in which there is a battery element comprising a roll form of cathode and anode stacked one upon another via a separator. At the upper end of the battery can 2, there is a header 7 formed by integrating an external insulating sheet 4A and a cathode-side electrode drawing sheet 5 with a metal sheet 3 by means of a cathode-side electrode leading pin 6; this header 7 is mounted and sealed at the opening of the battery can 2. One portion of the header 7 is made thinner than the rest thereof so as to let an abnormally rising internal pressure escape from the battery and another portion of the header 7 is provided with a small hole 9 from which an electrolyte is poured in the battery assembly and which is sealed up after the pouring of the electrolyte. After the electrolyte is poured from the small hole 9 into the battery assembly, a metal member such as a stainless steel member is embedded in the small hole, and then welded thereto for sealing purposes.

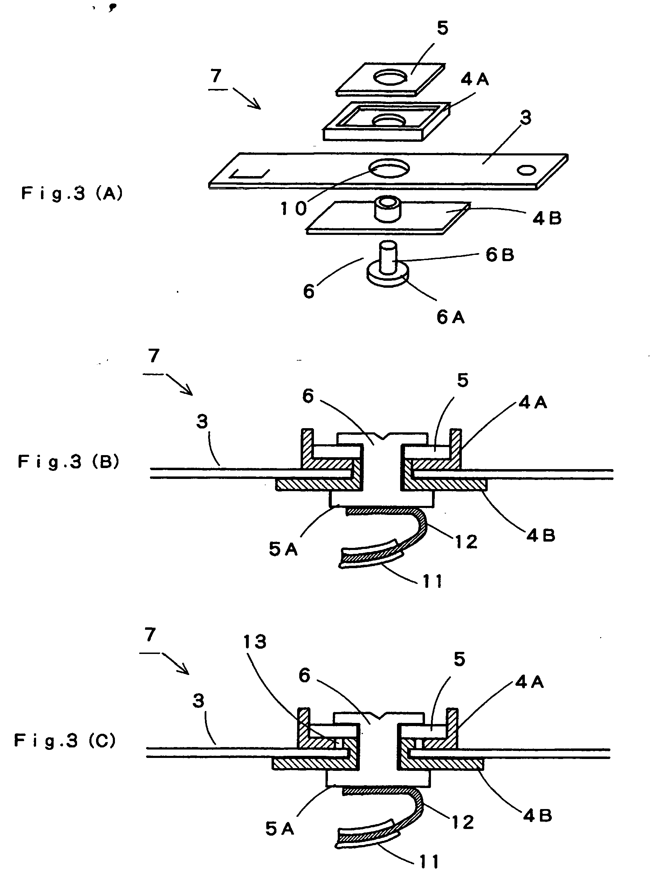

One exemplary header is shown in Figs. 3(A) to 3(C). Fig. 3(A) is an exploded perspective view of the header, and Fig. 3(B) is illustrative of the header in which an electrode-leading pin has been caulked.

An internal insulating sheet 4B formed of a polypropylene, fluorocarbon resin, etc. is mounted on a metal sheet 3 formed of a stainless steel sheet, a nickeled soft steel sheet, etc. by inserting a projection on the sheet 4B into a through-hole 10 formed in the sheet 3 from below. Then, an external insulating sheet 4A is placed over the upper surface of the sheet 3 to form an insulating member 4. Then, an electrode-leading pin 6 formed of a metal of good conductivity such as aluminum or an aluminum alloy and having a collar 6A is inserted through a hollow portion of the projection on the internal insulating sheet 4B, and an electrode-drawing sheet 5 is fitted in the external insulating sheet 4A. Finally, the collar 6A and the tip of a shaft 6B of the electrode-leading pin are caulked from above and below to form a header 7.

After joined to the collar 6a of the electrode lead pin 6 of the thus prepared header 7, an electrically conductive tab 12 joined to the battery element and covered with an insulating member 11 is fitted into an opening at the battery can, and then laser welded at its periphery to seal up the opening.

Upon header assembling, the electrode-leading pin 6 is crushed by caulking into contact with the plane of the electrode-drawing sheet 5, so that a conductive connection is made between the electrode-leading pin and the cathode-drawing sheet 5, and the cathode-leading pin crushed by caulking inflates into uniform engagement with the flat surface and cylindrical wall surface of the insulating member, thereby sealing up the opening.

However, some of such closed type batteries are found to have insufficient sealing properties at and around the electrode-leading pin, and deteriorate with time.

As shown in Fig. 3(C), there is often a void 13 between the external insulting sheet 4A and the internal insulating sheet 4B interposed between the electrode-leading pin 5 and the metal sheet 3 of the battery header, and so electrolyte leakage or other problems may possibly arise through that void. Presumably, the void 13 may have been caused at the caulking step of the electrode-leading pin 6 or due to its deformation on contraction by heat ensuing from laser welding for welding of an external connecting lead to the electrode-drawing sheet 5, welding the electrode-leading pin 6 to one electrode of the battery element or welding the battery header to the battery can.

WO 99/05896 discloses hermetic seal for an encased power source according to the preamble of claim 1.

The primary object of the present invention is to provide a closed type battery having an electrode-sealing structure wherein an electrode-leading pin is sealed up by caulking, which battery is improved in terms of insulation and airtightness with satisfactory conductive contact of the electrode-leading pin with an electrode-drawing sheet, and has reduced changes with time and increased reliability. This object is achieved with the features of the claims.

Figs. 1(A) to 1(D) are illustrative of a closed type battery according to the present invention.

Fig. 2 is illustrative of one exemplary closed type battery.

Figs. 3(A) to 3(C) are illustrative of one exemplary header.

Thus, the present invention provides a closed type battery comprising a battery header in which an electrode-drawing sheet of polarity opposite to that of a battery can is fixed by caulking to an insulating member fitted into a through-hole in a metal sheet while an electrode-leading pin remains inserted into the through-hole, wherein an internal insulating sheet mounted on a surface of the metal sheet of the battery header located inside the battery can comes in contact at two or more surfaces with an external insulating sheet mounted on a surface of the metal sheet of the battery header located outside the battery can.

In the closed type battery, the external insulating sheet is located in a recess formed in the metal sheet of the battery header.

In the closed type battery, the internal and external insulating sheets have a surface of contact that comprises a plane vertical to the axis of the electrode-leading pin and a curved surface concentric with the electrode-leading pin.

In the closed type battery, the internal and external insulating sheets have a surface of contact wherein two surfaces concentric with the electrode-leading pin and having different radii are coupled together at a plane vertical to the electrode-leading pin.

In the closed type battery, the internal and external insulating sheets have a surface of contact wherein three surfaces vertical to the axis of the electrode-leading pin are coupled together at two surfaces concentric with the electrode-leading pin and having different radii.

In the closed type battery, the internal and external insulating sheets have a surface of contact comprising two surfaces inclining with respect to the axis of the electrode-leading pin.

The closed type battery is provided in the form of a lithium ion battery.

In the battery header of the closed type battery of the invention, the electrode-leading pin is inserted through insulating member pieces located on both surfaces of the metal sheet, and the electrode-leading pin is then caulked to make the electrode-drawing sheet integral with the upper insulating member piece. The surface of contact between the two insulating member pieces is defined in a stepwise or other form, rather than defined by one surface, so that even when there is a local void at the surface of contact between the two insulating member pieces, airtightness is kept by either one of the stepwise surfaces, thereby making sure airtightness between the two insulating member pieces. This finding underlies the present invention.

By configuring the surface of contact between the insulating member pieces in a stepwise or groove-and-projection form, it is possible to make sure airtightness for the surface of contact between the two insulating member pieces.

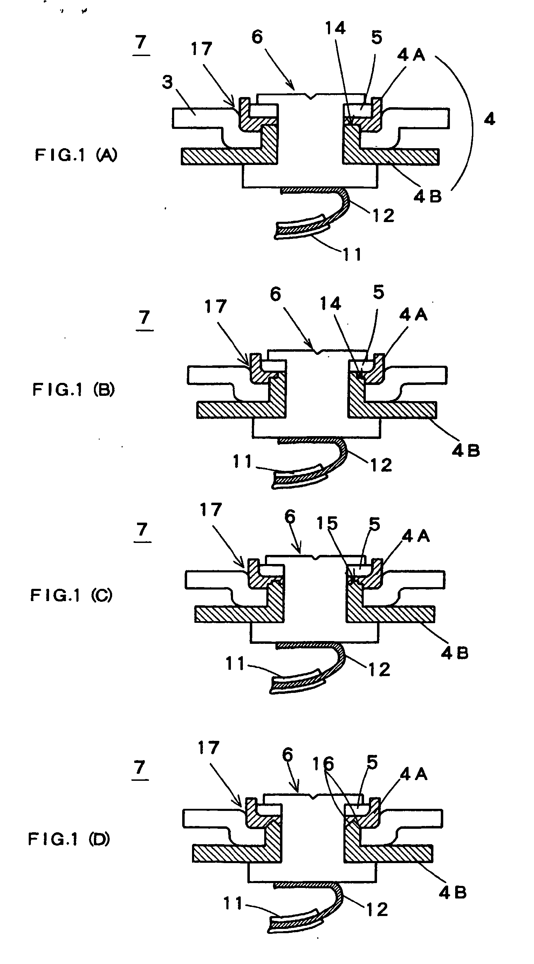

The present invention is now explained with reference to Figs. 1(A) to 1(D).

Figs. 1(A) to 1(D) are illustrative in section of a substantial portion of the electrode-drawing terminal of the closed type battery. Fig. 1(A) is a sectional view of one embodiment of the header, and Figs. 1(B) and 1(C) are illustrative of other embodiments.

As shown in Fig. 1(A), a metal sheet 3 of a header 7 that forms a closed type battery is provided with an insulating member 4 comprising an external insulating sheet 4A located from above and an internal insulating sheet 4B located from below. While an electrode-drawing sheet 5 is provided on the external insulating sheet 4A, an electrode-leading pin 6 is caulked for sealing-up and integrating purposes.

The external insulating sheet 4A comes in contact with the internal insulating sheet 4B not only at a surface parallel with the electrode-leading pin but also at a surface parallel with the electrode-leading pin and a horizontal surface 14 contiguous thereto. This ensures that airtightness is maintained even when slight misalignments, etc. occur at a stepwise surface of contact of the external insulating sheet 4A with the internal insulating sheet 4B on caulking or contraction occurs due to heat ensuing from laser welding or the like.

In another embodiment of the invention shown in Fig. 1(B), the electrode-leading pin 5 comes in contact with the insulating member at only the wall surface of the internal insulating sheet 4B, and the internal and external insulating sheets 4B and 4A come in contact with each other at three surfaces of stepwise shape in section, i.e., two surfaces parallel with the axis of the electrode-leading pin 6 and a horizontal surface 14 that connects them together. Airtightness is more ensured than achieved in the embodiment of Fig. 1(A). This ensures that more satisfactory airtightness is maintained even when slight misalignments, etc. occur at a stepwise surface of contact of the external insulating sheet 4A with the internal insulating sheet 4B on caulking or contraction occurs due to heat generated from laser welding or the like.

In yet another embodiment of the invention shown in Fig. 1(C), a portion of contact of an internal insulating sheet 4A with an external insulating sheet 4B is provided with a projection-and-groove combination 15 comprising a groove and a projection to be fitted therein. The advantage of this embodiment is that misalignments at that combination can be so reduced that far more satisfactory airtightness is achievable.

In a further embodiment of the invention shown in Fig. 1(D), a V-shaped engagement 16 of V shape in section is provided, offering the same advantage as in Fig. 1(C).

Throughout the embodiments shown in Figs. 1(A) to 1(D), the metal sheet 3 of the header 7 is provided with a recess shown generally at 17, which is directed toward the interior of the battery can, and the external insulating sheet 4A is fitted in the recess 17. When the electrode-leading pin is caulked, accordingly, the outer edge of the external insulating sheet 4A is so kept against movement that the positioning precision of the insulating sheet is improved. Further, the electrode-drawing terminal is attached at the recess, leading to another advantage that the amount of the electrode-drawing terminal projecting out of the end face of the battery is reduced.

The internal and external insulating sheets may be each formed of polypropylene, thermoplastic fluorocarbon resin such as tetrafluoroethylene-perfluoroalkoxyethylene copolymer (PFA) or tetrafluoroethylene-hexafluoropropylene (FEP), etc.

For the electrode-drawing sheet provided on the upper surface of the external insulating sheet 4A positioned on the outer surface of the header, for instance, use may be of a nickel sheet, a nickeled soft steel sheet, a copper sheet, and a nickel silver sheet.

More preferably, these electrode-drawing sheets should have been plated on their surfaces. Plating is effective not merely for lowering the contact resistance of the electrode-drawing sheet and electrode-leading sheet but also for preventing any corrosion of the electrode terminal by an electrolyte deposited onto it and any electrochemical elution and corrosion of the same by contact potential differences.

Preferably, the electrode-drawing sheet should be plated with gold or other noble metal, silver, tin, etc., although it is particularly preferable to use noble metals such as gold having high corrosion resistance.

For the electrode-leading pint, it is preferable that a metal material such as aluminum or its allow is configured into an electrode-leading pin blank and the blank is then annealed.

Annealing allows the electrode-leading pin to be uniformly transformed upon caulking, and to have so decreased surface hardness that surface cracking or other defects are unlikely to occur. This in turn makes improvements in airtightness between the electrode-leading pin and the insulating member, and so on.

It is here noted that annealing causes a temporary lowering of the hardness of the electrode-leading pin; however, the electrode-leading pin that has been caulked has a hardness equivalent to that of one not annealed because of being subjected to work-hardening by impacts on caulking. Thus, the sealing properties are unlikely to become low, nor is the caulking strength of the electrode-leading pin likely to drop.

The closed type battery of the present invention comprises a battery header in which the electrode-leading pin is caulked while inserted through the insulating member fitted into the through-hole formed in the metal sheet, thereby ensuring that the battery header keeps airtightness and forming the external connecting terminal. In this header, insulating member pieces mounted on the metal sheet from outside and inside are designed to have at least two surfaces of contact. When the insulating member is mounted in place and caulked, accordingly, there is no misalignment between both. Even when the insulating member shrinks under the influence of heat ensuing from laser welding or the like, airtight ness between both is kept intact. It is thus possible to provide a closed type battery of significantly improved reliability.

## Claims

1. A closed type battery comprising a battery header (7) in which an electrode-drawing sheet (5) of electric polarity opposite to that of a battery can is fixed by caulking to an insulating member (4) comprising an internal insulating sheet (4B) and an external insulating sheet (4A) and fitted into a through-hole in a metal sheet (3) while an electrode-leading pin remains inserted into the through-hole, wherein:
the internal insulating sheet (4B) mounted on a surface of the metal sheet (3) of the battery header (7) located inside the battery can comes into contact at two or more surfaces with the external insulating sheet (4A) mounted on a surface of the metal sheet (3) of the battery header (7) located outside the battery can,
**characterized in that** the external insulating sheet (4A) and the two or more surfaces are located in a recess (17) formed in the metal sheet (3) of the battery header (7), and the external insulating sheet (4A) is fitted in the recess.

2. The closed type battery according to claim 1, wherein the internal and external insulating sheets (4B and 4A, resp.) have a surface of contact that comprises a plane vertical to an axis of the electrode-leading pin and a curved surface concentric with the electrode-leading pin.

3. The closed type battery according to claim 1, wherein the internal and external insulating sheets have a surface of contact wherein two surfaces concentric with the electrode-leading pin and having different radii are coupled together at a plane vertical to the electrode-leading pin.

4. The closed type battery according to claim 1, wherein the internal and external insulating sheets have a surface of contact wherein three surfaces vertical to an axis of the electrode-leading pin are coupled together at two surfaces concentric with the electrode-leading pin and having different radii.

5. The closed type battery according to claim 1, wherein the internal and external insulating sheets have a surface of contact comprising two surfaces inclining with respect to an axis of the electrode-leading pin.

6. The battery according to any one of claims 1 to 6, which is provided in the form of a lithium ion battery.

## Patentansprüche

1. Geschlossene Batterie mit einem Batteriekopf (7) in dem ein Elektrodenziehblech (5) mit elektrischer Polarität entgegengesetzt zu der einer Batteriehülle durch Abdichten mit einem Isolierelement (4) befestigt ist, das eine interne Isolierfolie (4B) und eine externe Isolierfolie (4A) aufweist, und in eine Durchgangsbohrung eines Metallblechs (3) eingepasst ist, wobei ein Elektrodenführungsanschluss in der Durchgangsbohrung eingefügt bleibt, wobei:
die interne Isolierfolie (4B), die an einer innerhalb der Batteriehülle liegenden Oberfläche des Metallblechs (3) des Batteriekopfs (7) angebracht ist, an zwei oder mehr Oberflächen in Kontakt mit der externen Isolierfolie (4A) kommt, die an einer außerhalb der Batteriehülle liegenden Oberfläche des Metallblechs (3) des Batteriekopfs (7) angebracht ist,
**dadurch gekennzeichnet, dass**
die externe Isolierfolie (4A) und die zwei oder mehr Oberflächen in einer Ausnehmung (17) angeordnet sind, die in dem Metallblech (3) des Batteriekopfs (7) geformt ist, und die externe Isolierfolie (4A) in der Ausnehmung eingepasst ist.

2. Geschlossene Batterie nach Anspruch 1, wobei die interne und externe Isolierfolie (4B bzw. 4A) eine Kontaktoberfläche aufweisen, die eine Ebene senkrecht zu einer Achse des Elektrodenführungsanschlusses und eine mit dem Elektrodenführungsanschluss konzentrische, gekrümmte Oberfläche aufweist.

3. Geschlossene Batterie nach Anspruch 1, wobei die interne und externe Isolierfolie eine Kontaktoberfläche aufweisen, wobei zwei Oberflächen, die konzentrisch zum Elektrodenführungsanschluss und verschiedene Radien aufweisen, an einer Ebene senkrecht zum Elektrodenführungsanschluss verbunden sind.

4. Geschlossene Batterie nach Anspruch 1, wobei die interne und externe Isolierfolie eine Kontaktoberfläche aufweisen, wobei drei Oberflächen, die senkrecht zu einer Achse des Elektrodenführungsanschlusses sind, an zwei Oberflächen zusammengekoppelt sind, die mit dem Elektrodenführungsanschluss konzentrisch sind und verschiedene Radien aufweisen.

5. Geschlossene Batterie nach Anspruch 1, wobei die interne und externe Isolierfolie eine Kontaktoberfläche aufweisen, die zwei Oberflächen aufweist, die in Bezug auf eine Achse des Elektrodenführungsanschlusses geneigt sind.

6. Batterie nach einem der Ansprüche 1 bis 6 in der Form einer Lithium-Ionen-Batterie.

## Revendications

1. Batterie fermée comprenant une tête de batterie (7) dans laquelle une feuille de tirage d'électrode (5) de polarité électrique opposée à celle d'un boîtier de batterie est fixée par garniture sur un élément isolant (4) comprenant une feuille isolante interne (4B) et une feuille isolante externe (4A) et montée dans un trou traversant dans une feuille métallique (3) alors qu'une broche de conduction d'électrode reste insérée dans le trou traversant, dans laquelle :
la feuille isolante interne (4B) montée sur une surface de la feuille métallique (3) de la tête de batterie (7) située à l'intérieur du boîtier de batterie entre en contact à deux surfaces ou plus avec la feuille isolante externe (4A) montée sur une surface de la feuille métallique (3) de la tête de batterie (7) située à l'extérieur du boîtier de batterie,
**caractérisée en ce que** la feuille isolante externe (4A) et les deux surfaces ou plus sont situées dans un évidement (17) formé dans la feuille métallique (3) de la tête de batterie (7), et la feuille isolante externe (4A) est montée dans l'évidement.

2. Batterie fermée selon la revendication 1, dans laquelle les feuilles isolantes interne et externe (respectivement 4B et 4A) ont une surface de contact qui comprend un plan vertical par rapport à un axe de la broche de conduction d'électrode et une surface incurvée concentrique par rapport à la broche de conduction d'électrode.

3. Batterie fermée selon la revendication 1, dans laquelle les feuilles isolantes interne et externe ont une surface de contact dans laquelle deux surfaces concentriques par rapport à la broche de conduction d'électrode et ayant des rayons différents sont couplées ensemble à un plan vertical par rapport à la broche de conduction d'électrode.

4. Batterie fermée selon la revendication 1, dans laquelle les feuilles isolantes interne et externe ont une surface de contact dans laquelle trois surfaces verticales par rapport à un axe de la broche de conduction d'électrode sont couplées ensemble à deux surfaces concentriques par rapport à la broche de conduction d'électrode et ayant des rayons différents.

5. Batterie fermée selon la revendication 1, dans laquelle les feuilles isolantes interne et externe ont une surface de contact comprenant deux surfaces en inclinaison par rapport à un axe de la broche de conduction d'électrode.

6. Batterie selon l'une quelconque des revendications 1 à 6, qui est fournie sous la forme d'une batterie lithium-ion.
